# EUROPEAN PATENT SPECIFICATION

(11) **EP 4 036 252 B1**
(45) Date of publication and mention of the grant of the patent: **10.07.2024**
(21) Application number: 21154476.2
(22) Date of filing: 01.02.2021
(51) Int. Cl.: C14C 11/00, C14B 1/56, G06Q 30/00, B41M 5/00, C14C 3/06, C09D 11/322, C09D 177/00, C09D 175/04, C09D 11/101, C14B 7/00

(54) **MANUFACTURING DECORATED NATURAL LEATHER**
HERSTELLUNG VON DEKORIERTEM NATURLEDER
FABRICATION DE CUIR NATUREL DÉCORÉ

(43) Date of publication of application: 03.08.2022
(73) Proprietor: AGFA NV, 2640 Mortsel (BE)
(72) Inventor: DONDERS, Mark, 2640 Mortsel (BE); MALIALI, Angela, 2640 Mortsel (BE); COURTET, Vincent, 2640 Mortsel (BE); JANCART, Dieter, 2640 Mortsel (BE)
(74) Representative: Strijckers, Hans Louis P.

(56) References cited:
- EP-A1- 3 572 235
- WO-A1-2020/078774
- DATABASE WPI Week 201260, Derwent World Patents Index; AN 2012-J69903, XP002803348

## Description

### Technical Field

The present invention relates to a method of manufacturing decorated natural leather by inkjet, according to claim 1, and a jig, according to claim 11.

### Background Art

The manufacturing of natural leather articles is well known and can generally be split up in five phases. The preparatory phase 1 often occurs partly in a slaughterhouse and partly in a tannery, while phases 2 to 4 occur in the tannery and phase 5 occurs at a leather article manufacturer. In a first phase, the preparatory phase, the skin is removed from the animal (flaying) and pre-treated for the second phase of tanning. The pretreatment may involve processes such as soaking, liming, unhairing, splitting and pickling (adjusting pH for assisting penetration of tanning agents). In the tanning phase, the protein of the rawhide or skin is converted into a stable material that will not putrefy. Chrome is most frequently used as tanning agent whereby the tanned product obtains a pale blue colour, therefore commonly called "wet blue". In the third phase of crusting, the tanned leather is dried and softened. The crusting often includes processes such as stripping (removal of superficially fixed tannins), fat liquoring (fats, oils and waxes are fixed to the leather fibres), dyeing, whitening, physical softening, and buffing (abrasion of leather surface to reduce grain defects). In the fourth phase, called the finishing phase, the leather is made ready for sale to leather article manufacturers. Finishing operations may include lacquer coating, polishing and embossing. In the fifth phase, a leather article is manufactured, involving processes, which may include cutting, perforating, sewing, leather wrapping, decoration and embossing.

Natural leather has been decorated in the past by screen printing. However, screen printing is labour intensive as for each colour an individual screen is required. This is costly and time consuming, especially when personalization or customization is desired. Digital printing technology has found its way into manufacturing decorated natural leather. For example, GB 2510696 (SERICOL) and EP 3202581 A (CODUS/AGFA GRAPHICS) disclose methods of printing onto respectively into natural leather.

Inkjet printing is generally performed on substrates having a standardized shape and quality. Due to its origin, natural leather has an irregular shape and a non-standard quality. For example, leather produced from different cow hides may have different physical properties and can contain creases, dung marks, warts and scars from barbed wire. The latter can result in an inferior image quality of the inkjet printed image.

Another problem with inkjet printing on natural leather is that it is difficult to provide it as a flat substrate into the inkjet printer so that it does not hit or damage print heads. Some mechanical solutions to the problem are disclosed in EP 3450574 A (AGFA). Chemical solutions to the problem are disclosed in EP 3572234 A (AGFA) and EP 3572235 A (AGFA), wherein an adhesive is used to attach the leather to a temporary carrier.

Another method for keeping leather flat for inkjet printing is disclosed by WO 2020/225046 A (AGFA) wherein an air-permeable support having a fibrous layer, such as felt, is employed in combination with vacuum suction.

For printing on three-dimensional products like pens, golfs balls, phone cases, lighters and other three-dimensional objects, jigs or fixtures are key tools for achieving high print quality. A jig is a printing tool that is used to hold three-dimensional products in a fixed orientation for printing. They are often used in screen and pad printing, but also in inkjet printing as exemplified by EP 3272542 A (OCE) for printing on smart phone covers.

KR201200811035 A (YOUNG) discloses a method involving inserting the leather sheet (20) in a sheeting groove formed in an upper side of a jig. WO2020/078774 A1 (AGFA) discloses a method of manufacturing decorated natural leather including the steps of: applying a crusted leather, having a corium side, a grain side and an edge, on a conveyor system, having a position means; aligning said crusted leather by moving said edge against said position means; and laminating said aligned crusted leather on a temporary carrier, having a top layer, wherein said corium side is attached by said top layer on said temporary carrier while conveying said crusted leather on said conveyor system towards said temporary carrier and moving said temporary carrier relative to said conveyor system; and inkjet printing on said grain side with one or more pigmented inkjet inks an image by an inkjet printing system.

For the proposed solutions of inkjet printing on natural leather, there remains a trade off in image quality, manufacturing speed and printing reliability. This is especially the case, when inkjet printing a series of identical leather pieces of irregular shape, e.g. for a certain type of handbag or for leather seats in automotive, with personalized images.

### Summary of invention

In order to overcome the problems described above, preferred embodiments of the present invention have been realised with a method for manufacturing decorated natural leather according to claim 1.

It was found that by using the specific order of steps in the manufacturing method and a two-part jig that high image quality images could be printed on natural leather in a reliable manner at high productivity.

Using a jig allowed fast and accurate alignment in the inkjet printer, so that images could be printed edge-to-edge on the leather pieces without spillage of ink.

A re-useable jig was obtained upon selecting a repositionable pressure sensitive adhesive.

These and other objects of the present invention will become apparent from the detailed description hereinafter.

### Brief description of drawings

Figure 1 is a leather handbag (1) having a flap (2), a front (3), a back (not visible), a side (4) and a leather strap (5). The handbag (1) is assembled by sewing together the leather pieces (6) to (9), of which some or all are decorated by inkjet.
Figure 2 is an embodiment of the invention showing a method for making decorated leather by inkjet. In step A, a jig layer (11) is provided with holes (12) corresponding to the contours of leather pieces to be inkjet printed. In step B, an adhesive back layer (13) is attached to the jig layer (11) having the holes (12). In step C, the leather pieces (14) are positioned in their corresponding holes. Decorated leather pieces (15) are obtained in the inkjet printing step D, preferably also printing an identification code (16) on the jig layer (11).
Figure 3 shows schematically a cross-section of an animal skin including a grain (31) and a corium (33) separated by a junction of grain and corium (32). The different leathers made from the animal skin include full grain leather (34), top grain leather (35) and split leather (36).

### Description of embodiments

### Definitions

The term "crusted leather" means leather that has been tanned and crusted, but not finished.

The term "hole" means an empty space between two surfaces of a layer having an orifice at both surfaces

The term "cavity" means an empty space between two surfaces of a layer having an orifice at only one of the surfaces.

### Manufacturing Methods

A method of manufacturing decorated natural leather according to the present invention includes the steps of: a) providing a jig layer (11) with a hole (12) corresponding to the external contour of a leather piece (14); b) attaching an adhesive back layer (13) to the jig layer (11) having the hole (12); c) positioning a leather piece (14) in the hole (12) wherein the corium side is attached to the adhesive back layer; and d) inkjet printing a decorative image on the leather piece (14) to deliver a decorated leather piece (15), wherein the adhesive back layer (13) uses a repositionable pressure sensitive adhesive.

In a preferred embodiment, the thickness of the jig layer is larger than the thickness of the leather piece. The advantage of this is that it can be automatically verified if a non-flat portion of the leather piece might hit a print head of the inkjet printer. Furthermore, a contacting means can be provided in an inkjet printer to prevent the collision between a leather piece and a print head. Such contacting means may be a roller positioned just before the shuttling print head module of the inkjet printer. The roller makes contact with the jig and presses the leather piece (14) back in the hole (12) of the jig layer (11), so that it cannot hit the print head or cause image artefacts.

For simultaneously achieving reliable inkjet printing and good image quality, the difference in thickness between the jig layer and the leather piece is preferably no more than 0.6 mm, more preferably in the range of 0.3 to 0.5 mm. This allows to have a distance of at least 1.3 mm, preferably 1.5 mm between the nozzle plate of the print heads and the top surface of the jig, which is considered to be a safe distance when transporting the jig on a belt under the print head module of the inkjet printer, thus ensuring high printing reliability. For excellent image quality, the distance between the nozzle plate of the print heads and the top surface of the leather piece (14) in the hole (12) is preferably less than 3 mm, more preferably no more than 2 mm.

Usually a cavity rather than a hole is made in a jig for holding three-dimensional objects. In the present invention, it was found that it was faster to make a hole in a jig layer and then closing one of the orifices with an adhesive back layer, rather than making a cavity. At the same time the adhesive of the back layer allowed not only attaching the back layer (13) to jig layer (11), but also attaching the leather piece (14) to the back layer (13).

For good image quality, the printing accuracy should preferably be at least 0.5 mm on the leather piece. This means that the jig layer (11) is provided with a hole (12) having an extra 0.5 mm added to the external contour of a leather piece (14).

A preferred material for the jig layer is a PVC foam board, because it is relatively light weight compared to other materials and has sufficient strength and flexibility. Such PVC foam boards are readily available at low cost in a wide range of thicknesses. Suitable commercially available PVC foam boards are Forex^{®} PVC plates and Vikupor^{®} PVC plates available from VINK.

There is no real limitation on the size of the jig layer, but the size of the jig layer is preferably no larger than 1.3 m by 1.3 m. Such a size is convenient to be handled manually, and such a size is also less likely to break when using PVC foam boards. The thickness of the jig layer is determined by the thickness of the leather that has to be inkjet printed.

The external contour of a leather piece (14) defines the dimension of a hole (12) in a jig layer (11). Leather pieces can be scanned for obtaining the external contour, this is especially advantageous when the external contour has a non-rectangular or very irregular shape as it enhances reliability and productivity. This scanning information is then used for cutting the hole in the jig layer preferably with a laser cutter as they are generally more accurate than a knife cutter. The same scanning information can also be used to define an image layout for inkjet printing. The image layout corresponds with the position of the one or more holes in the jig layer so that the decorative image can be printed edge-to-edge on the leather pieces in these holes.

When only one hole is present in the jig, this is usually done when the leather piece is a so-called full side or a half side. In such a case, the leather piece is then further cut into smaller leather pieces after inkjet printing.

The cutting of the holes is preferably performed on an automated cutting table, such as a Kongsberg^{®} cutting table from ESKO or an Acorta^{®} cutting table from AGFA.

When the one or more holes (12) are present in the jig layer (11), an adhesive back layer (13) is attached with the adhesive to the jig layer (11), thereby closing one of the orifices of a hole (12) and thus forming a " closed hole", i.e. a cavity. In such a cavity, the unused adhesive serves the purpose of immobilizing the leather piece (14) when it is positioned into the hole. A leather piece (14) is positioned in the hole (12) with the corium side attached to the adhesive back layer for obtaining superior image quality. Jigs

The jig of the present invention includes a jig layer (11) including a hole (12) corresponding to the external contour of a leather piece (14) and having an adhesive back layer (14) attached to the jig layer (11) and the leather piece (14), wherein the adhesive back layer (13) uses a repositionable pressure sensitive adhesive.

In a preferred embodiment, the jig layer (11) is a PVC foam board.

### Adhesive Back Layer

There is no limitation on the type of adhesive used in the adhesive back layer (13) as long as the leather piece (14) and the adhesive back layer (13) can be separated from each other after inkjet printing.

An adhesive minimizes the risk that a leather piece can hit a print head during the inkjet printing.

The adhesive is a pressure sensitive adhesive. Pressure sensitive adhesives have been discussed in detail by Creton (MRS Bulleting, 434-439 (2003); Materials Science and Technology, A comprehensive treatment, Volume 18, Processing of Polymers, Chapter 15, Material Science of Pressure-Sensitive Adhesives, Wiley-VCH (2012))).

In a preferred embodiment, the adhesive back layer (13) uses a repositionable pressure sensitive adhesive. Such a repositionable pressure sensitive adhesive is well-known, even to the larger public, for example, by the Post-it^{®} notes available from 3M.

Repositionable pressure sensitive adhesives are preferred, as the jig can then be re-used after removing the inkjet printed leather piece (14) from the hole (12) in the jig layer (11). This is economically advantageous for inkjet printing a series of identical leather pieces, possibly with personalized decorative images.

Bio-inspired repositionable adhesives have been described by del Campo and Fernández-Blázquez (Biomimetic Approaches for Biomaterial Development, chapter 11, ed. João F. Mano, Wiley-VCH Verlag GmbH& Co. KGaA, first edition, 2012).

Preferred polymers for pressure sensitive adhesives are selected from the group consisting of polyacrylates, silicone polymers, polydienes or copolymers thereof such as natural rubber and styrene-butadiene type of rubbers and block copolymers of styrene and a diene. Typical formulations of pressure sensitive adhesives further contain tackifying resins to tailor the properties towards the application. Pressure sensitive adhesives further can contain additives such as waxes, plasticizers and anti-oxidants.

The pressure sensitive adhesive is applied on the surface of a backing layer from water, a solvent or as a hot melt adhesive. Hot melt adhesives and water borne adhesives are preferred. Water borne adhesives are particularly preferred as being environmentally friendly. Water borne pressure sensitive adhesives are emulsion-based and have been described in detail by Jovanović and Dubé (Journal of Macromolecular Science, Part C-Polymer Reviews, C44(1), 1-55 (2004)).

Suitable adhesives are available from KIWO (KISSEL + WOLF GmbH).

There is no limitation on the way of applying the adhesive to a surface of the back layer, which may be e.g. by coating or by spraying. Repositionable adhesives are preferred as they cause no or very limited damage to the corium side upon separating the leather piece from the back layer. A commercial example of a suitable spray adhesive is the 3M^{®} Repositionable 75 Spray Adhesive. Spray adhesives are also known as aerosol adhesives.

Ready-to-use adhesive back layers are also commercially available. Suitable products include the self-adhesive foils from GRAFITYP and the pressure sensitive PET-foils available as Synaps^{®} PS from AGFA. The Synaps^{®} PS AR type uses a repositionable adhesive.

### Identification Codes

In a preferred embodiment of the manufacturing method of decorated natural leather, one or more identification codes are used that have a connection to the leather pieces that are inkjet printed with a decorative image. This connection can, for example, be information of which customer should receive the leather pieces or a leather article made with the leather pieces. Another example of the connection, is that it identifies which leather article should be made with it.

An identification code may include alphanumerical data, such as a name and/or numbers, but preferably it is a machine readable identification code. The identification code is preferably machine readable as this generally speeds up the manufacturing process and/or the logistic process as it allows for faster identification without errors. There is no restriction on the type of machine-readable identification code. It may be a simple bar code, but it may also be a so-called 2D code. Preferred 2D codes include a barcode, a QR code, a datamatrix code, a cool-data-matrix code, an aztec code, an upcode, a trillcode, a quickmark code, a shot code, a mcode, a beetagg and the like.

One or more identification codes may be present on the backing layer prior to inkjet printing. For example, the identification code can then identify which decorative image(s) are to be printed on the leather piece(s).

The identification code may also be present on the jig layer (11) preferably on the side opposite to the backing layer, unless the backing layer includes a transparent foil.

In a preferred embodiment of the manufacturing method, the identification code is inkjet printed on the jig layer (11) at the same time as the decorative images are printed. This minimizes the risk of errors in e.g. connecting the right customer to the printed leather pieces. The jig containing the printed leather pieces can also be sent as a whole to a leather article manufacturer without the need of further identifying the jigs sent.

Alternatively, an identification code is present on the back layer and after removing the jig layer only the back layer with the attached printed leather pieces is sent to the leather article manufacturer. The jig layer can then be re-used with a fresh back layer for printing a new set of leather pieces.

Instead of an identification code being present on the back layer prior to inkjet printing, the identification code can also be inkjet printed through a hole in the jig layer, wherein no leather piece is applied to the back layer.

### Decorative Images

There is no real limitation on the type of decorative image inkjet printed on the leather. The decorative image may consist of a single colour or it may include multiple colours such as black, white, cyan, magenta, yellow, red, orange, violet, blue, green and brown.

The decorative image may be purely decorative, but it may also contain alphanumerical data or other type of information, such as a logo or a pictogram.

### Natural Leather

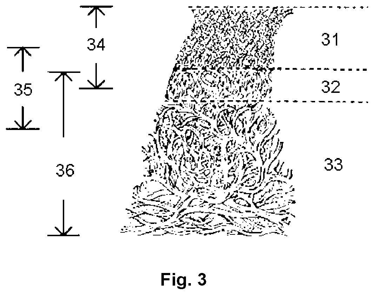

Natural leather comes in different grades (see Figure 3), such as full grain (34), top grain (35) which is essentially full-grain but with part of the grain layer sanded and the underlying split layer removed, and split leather (36). For the latter, the underlying layer of the hide is removed and used to create split leather. Depending on the thickness of the underlying layer, many splits can be created. Split leather has a rough appearance and is usually used to make suede. High image quality is obtained when printing is performed on the grain side of the natural leather.

For preventing grain damage and weakness, the hide or skin is tanned preferably by chrome, but other tanning methods such as vegetable tanning may also be used. After tanning, the leather is dried and softened into so-called crusted leather. The crusting may include processes such as stripping (removal of superficially fixed tannins), fat liquoring (fats, oils and waxes are fixed to the leather fibres), dyeing, whitening, physical softening, and buffing (abrasion of leather surface to reduce grain defects).

The decorated natural leather may be used for manufacturing a wide range of leather articles. Preferred leather articles include footwear, furniture, upholstery, bags and luggage, gloves, belts, wallets, clothing, automotive leather (e.g. train, plane, boat and car seats), interiors, books and stationary, packaging, equestrian articles and the like.

### Ink Receiving Layers

An ink receiving layer is preferably applied on the crust leather for increasing the image quality, especially when the leather pieces are intended for luxury leather articles. The low viscosity of inkjet inks normally lets them penetrate rapidly into the leather resulting in a reduced image quality.

The ink receiving layer may be applied as a single layer, or may be applied as multiple layers. The multiple layers may even have a different composition for improving properties like adhesion or flexibility.

The ink receiving layer preferably includes a polymer or copolymer based on polyurethane, as this has been found to improve flexibility to the printed leather. The ink receiving layer preferably further includes a polyamide polymer or copolymer, as polyamide has been found to improve the compatibility with the crust leather and to improve the strength of the ink receiving layer.

Suitable polyurethanes include Urepal^{™} PU147 and PU181 from CHEMIPAL S.p.A.; Melio^{™} Promul 61 from STAHL; Astacin^{™} Finish PS from BASF; Ecrothan^{™} 4075, 4078 and 4084 from MICHELMAN; Incorez^{™} CS8073 and CS065-195 from INCOREZ. The dry weight of the polyurethane in the ink receiving layer is preferably in the range of 1 to 6 g/m².

Suitable polyamides include the PA emulsion types ED310 and 161148 CX from MICHELMAN. The dry weight of the polyamide in the ink receiving layer is preferably less than 7 g/m², more preferably less than 5 g/m².

Although polyurethanes and/or polyamides are preferred as the polymers for the base" coat, other polymers may be used preferably in combination with the polyurethanes and/or polyamides. Such polymers preferably have an elongation at break of more than 200%, more preferably 300%. The elongation at break is measured according to ISO527-2, for example, with a MTS Exceed^{™} testing apparatus from MTS Systems Corporation.

Another type of preferred polymers to be used in the ink receiving layer are polyacrylates. Polyacrylates provide good flexibility and stabilize pigment dispersions in the ink receiving layer.

In a preferred embodiment, the ink receiving layer preferably includes a polymer or copolymer based on polyurethane and polymer or copolymer based on a polyacrylate. Such a combination brings excellent flexibility even in the presence of pigments.

Preferred polyacrylates are Roda^{™} Base 5514 from TFL and Primal^{™} HPB980 from LANXESS. A suitable polymeric acrylate emulsion is Bioflex^{™} KGA from LMF Biokimica.

A cross-linker may be incorporated in the ink receiving layer to improve the strength of the ink receiving layer and the adhesion to crust leather. Preferred cross-linkers include aldehyde based cross-linkers such as formaldehyde, melamine formaldehyde derivatives, urea formaldehyde resins, glyoxal and gluraraldehyde, epoxides, oxazolines, carbodiimides and isocyanates, isocyanates being particularly preferred. The dry weight of the cross-linker in the ink receiving layer is preferably less than 1.4 g/m², more preferably less than 1.0 g/m².

The ink receiving layer is preferably applied by spraying, but may be applied by any coating technique known, such as knife coating, extrusion coating, slide hopper coating and curtain coating.

The ink receiving layer may be transparent, but is preferably an opaque ink receiving layer as this masks defects in the natural leather.

The ink receiving layer may be a white ink receiving layer to enhance the colour vibrancy of the inkjet printed image, but preferably the ink receiving layer has a colour similar to that of the grain and if present, the corium. Any desired colour may be chosen for the corium or grain and the ink receiving layer, such as red, green, brown, black, blue...

### Inkjet Inks

The inkjet inks that are printed on the leather pieces contain a colorant. The colorant may be a dye, but is preferably a pigment. A colour pigment is less susceptible to light fading.

The pigmented inkjet inks that are inkjet printed may be selected from aqueous pigmented inkjet inks, solvent based pigmented inkjet inks and radiation curable pigmented inkjet inks. However, the one or more pigmented inkjet inks are preferably radiation curable inkjet inks, most preferably UV curable inkjet inks.

The pigmented inkjet inks preferably contain organic colour pigments as they allow for obtaining a high colour gamut on natural leather. Carbon black and titanium dioxide are inorganic pigments, which can be advantageously used in the present invention for composing black respectively white pigmented inkjet inks.

An organic colour pigment may be chosen from those disclosed by HERBST, Willy, et al. Industrial Organic Pigments, Production, Properties, Applications. 3rd edition. Wiley - VCH , 2004. ISBN 3527305769. Suitable colour pigments are disclosed in paragraphs [0128] to [0138] of WO 2008/074548 (AGFA GRAPHICS) .

In a preferred embodiment, the pigmented inkjet inks form a CMYK(W) or CRYK(W) inkjet ink set.

Pigment particles in inkjet inks should be sufficiently small to permit free flow of the ink through the inkjet-printing device, especially at the ejecting nozzles. It is also desirable to use small particles for maximum colour strength and to slow down sedimentation.

The numeric average pigment particle size of an organic colour pigment and an inorganic black pigment is preferably between 0.050 and 1 µm, more preferably between 0.070 and 0.300 µm and most preferably between 0.080 and 0.200 µm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern^{™} nano-S available from Goffin-Meyvis. A sample can, for example, be prepared by addition of one drop of ink to a cuvette containing 1.5 mL ethyl acetate and mixed until a homogenous sample was obtained. The measured particle size is the average value of 3 consecutive measurements consisting of 6 runs of 20 seconds.

A white pigment preferably has a numeric average pigment particle size larger than 180 nm in order to have a strong opacifying capability. Suitable white pigments are given by Table 2 in [0116] of WO 2008/074548 (AGFA GRAPHICS) . The white pigment is preferably a pigment with a refractive index greater than 1.60. The white pigments may be employed singly or in combination. Preferably titanium dioxide is used as pigment with a refractive index greater than 1.60. Suitable titanium dioxide pigments are those disclosed in [0117] and in [0118] of WO 2008/074548 (AGFA GRAPHICS).

When using UV curable pigmented inkjet inks, polymerizable compounds and at least one photoinitiator is present in the inkjet ink.

Any polymerizable compound commonly known in the art may be employed. The polymerizable compound may be any monomer or oligomer found in the Polymer Handbook Vol 1 + 2, 4th edition, edited by J. BRANDRUP et al., Wiley-Interscience, 1999 . An oligomer in the present invention is understood to contain 2 to 8 repeating monomeric units. Preferred monomers and oligomers are those listed in [0106] to [0115] in EP 1911814 A (AGFA) .

Preferably a monomer or oligomer capable of free radical polymerization is used as polymerizable compound. A combination of monomers, oligomers and/or prepolymers may also be used. The monomers, oligomers and/or prepolymers may possess different degrees of functionality, and a mixture including combinations of mono-, di-, tri-and higher functionality monomers, oligomers and/or prepolymers may be used. However preferably an amount of at least 60 to 100 wt% of monofunctional polymerizable compounds is used in the UV curable pigmented inkjet ink with the wt% based on the total weight of the inkjet ink. The viscosity of the radiation curable inkjet inks can be adjusted by varying the amount of specific monomers and oligomers.

The UV curable inkjet ink contains one or more photoinitiators, preferably one or more free radical photoinitiators. A free radical photoinitiator is a chemical compound that initiates polymerization of monomers and oligomers when exposed to actinic radiation by the formation of a free radical.

Suitable photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

The inkjet inks printed in step d of the manufacturing method are most preferably UV LED curable pigmented inkjet inks. Such inkjet inks allow for reliable and cost-effective inkjet printing.

In a particularly preferred embodiment, the one or more photoinitiators include an acylphosphine oxide photoinitiator and a thioxanthone photoinitiator. Such a combination allows for fast UV curing with UV LEDS emitting above 370 nm. UV LEDs are more economical in operating the inkjet printing than mercury lamps.

In order to increase the photosensitivity further, the UV curable inkjet ink may additionally contain co-initiators. Suitable examples of co-initiators can be categorized in three groups: (1) tertiary aliphatic amines, such as methyldiethanolamine and N-methylmorpholine; (2) aromatic amines such as 2-(dimethylamino)ethylbenzoate; and (3) (meth)acrylated amines such as dialkylamino alkyl(meth)acrylates and N-morpholinoalkyl-(meth)acrylates. The preferred co-initiators are aminobenzoates.

A preferred amount of photoinitiator and co-initiator is 0.1 to 30 wt%, and most preferably 5 to 10 wt% of the total weight of the UV curable inkjet ink.

The one or more pigmented inkjet inks may contain further additives such as surfactants, polymerization inhibitors and dispersants for the colour pigments.

The preparation of pigmented UV curable inkjet inks is well-known to the skilled person. Preferred methods of preparation are disclosed in paragraphs [0076] to [0085] of WO 2011/069943 (AGFA).

### Top Coats

A top coat may be applied onto the decorative image for enhancing the scratch resistance of the decorative image.

The top coat may be applied as a single layer, or may be applied as multiple layers. The multiple layers may even have a different composition for improving properties like flexibility.

The protective top coat may have the same or a similar composition as the ink receiving layer. Usually the protective top coat is somewhat optimized according to the leather application. For example, flexibility does not play an important role for a leather book cover contrary to leather shoes. Hence, the protective top coat for a book cover may be optimized towards scratch resistance.

The top coat preferably includes a cross-linker and a polymer or copolymer based on polyurethane and/or polyamide.

The top coat preferably includes a polymer or copolymer based on polyurethane as this is beneficial for the flexibility of the printed leather. A polyamide polymer, which is found to have a high compatibility with a polyurethane binder, is preferably included if the scratch resistance needs to be improved.

Suitable polyurethanes include Urepal^{™} PU147 and PU181 from CHEMIPAL S.p.A.; Melio^{™} Promul 61 from STAHL; Astacin^{™} Finish PS from BASF; Ecrothan^{™} 4075, 4078 and 4084 from MICHELMAN; Incorez^{™} CS8073 and CS065-195 from INCOREZ. The dry weight of the polyurethane in the top coat is preferably in the range of 1 to 6 g/m².

Suitable polyamides include the PA emulsion types ED310 and 161148 CX from MICHELMAN. The dry weight of the polyamide in the top coat is preferably less than 7 g/m², more preferably less than 5 g/m².

Although polyurethanes and/or polyamides are preferred as the polymers for the top coat, other polymers may be used preferably in combination with the polyurethanes and/or polyamides. Such polymers preferably have an elongation at break of more than 200%, more preferably 300%. The elongation at break is measured according to ISO527-2, for example, with a MTS Exceed^{™} testing apparatus from MTS Systems Corporation.

Another type of preferred polymers to be used in the top coat are polyacrylates. Polyacrylates provide good flexibility to the top coat.

In a preferred embodiment, the top coat preferably includes a polymer or copolymer based on polyurethane and polymer or copolymer based on a polyacrylate. Such a combination brings excellent flexibility.

Preferred polyacrylates are Roda^{™} Base 5514 from TFL and Primal^{™} HPB980 from LANXESS. A suitable polymeric acrylate emulsion is Bioflex^{™} KGA from LMF Biokimica.

A cross-linker may be incorporated in the protective top coat to improve the scratch resistance. Preferred cross-linkers include those mentioned above for the ink receiving layer. The dry weight of the cross-linker in the protective top coat is preferably less than 1.4 g/m², more preferably less than 1.0 g/m².

The top coat is preferably applied by spraying, but may be applied by the same coating techniques as mentioned above for the ink receiving layer.

The top coat is most preferably a transparent top coat, but may be a translucent top coat. By having a transparent top coat, the inkjet printed image is clearly visible through the top coat. By using a translucent top coat, a special aesthetic effect is created.

If a matt top surface is desired for the inkjet printed leather, a matting agent may be included. Any suitable matting agent may be used. Preferred matting agent include silica. A preferred commercially available example of a silica dispersion is Euderm^{™} SN2 from LANXESS.

### Inkjet Printing Devices

The one or more pigmented inkjet ink are jetted by one or more print heads ejecting small droplets in a controlled manner through nozzles onto natural leather moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink or liquid. When the voltage is again removed, the ceramic expands to its original shape, ejecting a drop of ink from the print head.

A preferred piezoelectric print head is a so-called through-flow piezoelectric drop-on-demand print head. By using through-flow print heads, the reliability is enhanced and thus a more efficient and economical method of manufacturing high quality decorated natural leather articles is obtained. Such a print head is, for example, available from TOSHIBA TEC as the CF1ou print head.

However, the inkjet printing method according to the present invention is not restricted to piezoelectric inkjet printing. Other inkjet print heads can be used and include various types, such as a continuous type print head.

The inkjet print head normally scans back and forth in a transversal direction across the moving leather surface, known as a multi-pass printing mode. Sometimes the inkjet print head does not print on the way back. Bidirectional printing is preferred for obtaining a high areal throughput.

Another preferred printing method is by a "single pass printing process", which can be performed by using page wide inkjet print heads or multiple staggered inkjet print heads that cover the entire width of the leather surface. In a single pass printing process, the inkjet print heads usually remain stationary and the ink-receiving leather surface is transported under the inkjet print heads.

An advantage of using a multi-pass printing mode is that the liquid UV curable inkjet ink is cured in a consecutive passes, rather than in a single pass that would require a curing device with a high UV output. The print head lifetime is also larger for multi pass printing. While in single pass printing one side shooter is sufficient to replace the whole print head, in multi pass printing side shooters and even failings can be tolerated. Also the cost of a multi-pass printer is usually much lower, especially for large format crusted leather.

### Curing Devices

If aqueous or solvent based pigmented inkjet inks are used, then some curing device for evaporation of water and organic solvents is required. Suitable curing means include a heat radiation means like a hot air dryer, an oven, or an infrared light source, such as an infrared laser, one or more infrared laser diodes or infrared LEDs.

An effective infrared radiation source for aqueous inkjet inks has an emission maximum between 0.8 and 2.5 µm, preferably between 0.8 and 1.5 µm. Such an infrared radiation source is sometimes called a NIR dryer.

If UV curable pigmented inkjet inks are used, then curing is usually performed by ultraviolet radiation alone. If so-called hybrid UV curable pigmented inkjet inks containing also water or organic solvents are used, then the curing device preferably further also includes curing means used for aqueous or solvent based pigmented inkjet inks.

In inkjet printing, the curing device may be arranged in combination with the print head of the inkjet printer, travelling therewith so that the inkjet ink is exposed to curing radiation very shortly after been jetted.

Any ultraviolet light source, as long as part of the emitted light can be absorbed by the photo-initiator or photo-initiator system, may be employed as a radiation source, such as a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:
- UV-A: 400 nm to 320 nm
- UV-B: 320 nm to 290 nm
- UV-C: 290 nm to 100 nm.

Furthermore, it is possible to cure the image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages such as a fast curing speed and a high curing degree.

In a particularly preferred embodiment, the UV curing is performed using UV LEDs having an emission wavelength higher than 360 nm.

For facilitating curing, the inkjet printer may include one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### EXAMPLE

This example illustrates one way of how to the invention can be implemented.

### Preparation of a Jig

Leather pieces having a thickness of 1.7 mm were cut to an A4-size from a chrome tanned cow side, dyed black, with black coloured ink receiving layers and texture embossing available from ECCO.

A Vikupor^{®} PVC foam board having a thickness of 2 mm was used to prepare a jig layer of 1200 mm x 1200 mm. Three holes having a size that was 0.5 mm larger at each edge than an A4 size were cut into the jig layer using a Konsberg^{®} table cutter.

A piece of a 0.1 mm thick self-adhesive foil from GRAFITYP available as POLY 75 WGPT 152.5cm x 50m was laid on a table with the adhesive side facing upwards. The jig layer having the holes was then placed on the self-adhesive foil. The excess foil around the jig layer was trimmed.

Three A4-size leather pieces were then positioned in the holes of the jig layer by pressing them against the repositionable pressure sensitive adhesive. It was observed that it is still possible to shift the leather into the corner even when it is already touching the adhesive. It was also easy to observe that no part of the leather piece was present above the top surface of the jig layer.

### Inkjet Printing of Leather Pieces

The jig with the three leather pieces were loaded onto the belt of an Alussa^{®} eTU25 UV inkjet printer in the (0,0) position against the set bar of the printer. The gap between the print heads and the jig top surface was set to 1.7 mm. A different multi-colour decorative image was printed on each of the three leather pieces using the Alussa^{®} iUL 10 UV inkjet inks. After the UV LED curing of the printed samples, the jig was removed from the belt of the printer and the cured leather samples were detached from the jig.

The jig was then re-used by positioning three new A4-size leather pieces in the holes of the jig. The three leather pieces were then inkjet printed in the same way using the Alussa^{®} eTU25 UV inkjet printer and the Alussa^{®} iUL 10 UV inkjet inks. It was found that the jig could be re-used at least 10 times for printing the leather samples in a fast and reliable manner.

No residue of the adhesive could be detected on the corium side of the leather pieces.

### Reference signs list

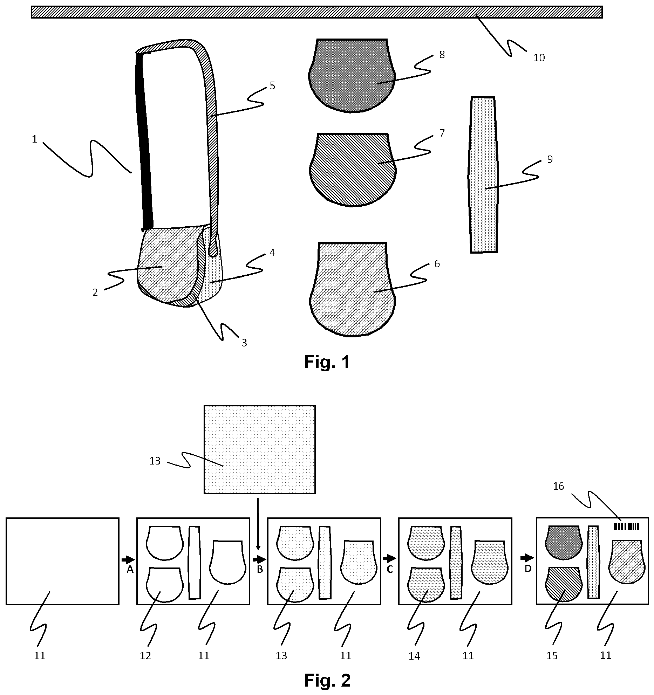

The following reference signs were used in Figures 1 and 2.

**Table 1**

| | |
|---|---|
| 1 | Handbag |
| 2 | Flap |
| 3 | Front |
| 4 | Side |
| 5 | Strap |
| 6 | Flap leather piece |
| 7 | Front leather piece |
| 8 | Back leather piece |
| 9 | Side and bottom leather piece |
| 10 | Strap leather piece |
| 11 | Jig layer |
| 12 | Hole |
| 13 | Adhesive back layer |
| 14 | Leather piece |
| 15 | Decorated leather piece |
| 16 | Identification code |
| 31 | Grain |
| 32 | Junction of grain and corium |
| 33 | Corium |
| 34 | Full grain leather |
| 35 | Top grain leather |
| 36 | Split leather |

## Claims

1. A method of manufacturing decorated natural leather including the steps of:
a) providing a jig layer (11) with a hole (12) corresponding to the external contour of a leather piece (14);
b) attaching an adhesive back layer (13) to the jig layer (11) having the hole (12);
c) positioning a leather piece (14) in the hole (12) wherein the corium side is attached to the adhesive back layer;
d) inkjet printing a decorative image on the leather piece (14) to deliver a decorated leather piece (15); and
wherein the adhesive back layer (13) uses a repositionable pressure sensitive adhesive.

2. The method as claimed in claim 1, wherein the thickness of the jig layer (11) is larger than the thickness of the leather piece.

3. The method as claimed in claim 1 or 2, wherein the external contour is obtained by scanning the leather piece (14).

4. The method as claimed in any one of claims 1 to 3, wherein the hole (12) is cut by a laser cutter.

5. The method as claimed in any one of claims 1 to 4, wherein an image layout is defined for inkjet printing on a jig layer (11) containing one or more holes (12).

6. The method as claimed in any one of claims 1 to 5, wherein the jig layer (11) or the adhesive back layer includes an identification code (16).

7. The method as claimed in claim 6, wherein the identification code (16) is machine readable.

8. The method as claimed in any one of claims 1 to 7, wherein one or more UV LED curable pigmented inkjet inks are inkjet printed in step d.

9. The method as claimed in any one of claims 1 to 8, wherein the leather piece (14) is a crusted leather piece having a polyurethane containing ink receiving layer.

10. The method as claimed in any one of claims 1 to 9, wherein the jig layer (11) is a PVC foam board.

11. A jig comprising a jig layer (11) including a hole (12) corresponding to the external contour of a leather piece (14) and having an adhesive back layer (14) attached to the jig layer (11) and the leather piece (14), wherein the adhesive back layer (13) uses a repositionable pressure sensitive adhesive.

12. The jig as claimed in claim 11, wherein the jig layer (11) is a PVC foam board.

13. The jig as claimed in any one of claims 11 to 12, wherein the jig layer includes an identification code (16), preferably machine readable.

## Patentansprüche

1. Ein Verfahren zur Herstellung von dekoriertem Naturleder, das die folgenden Schritte umfasst:
a) Bereitstellen einer Halteschicht (11) mit einem Loch (12), das der Außenkontur eines Lederstücks (14) entspricht,
b) Befestigen einer Kleberückschicht (13) an die Halteschicht (11) mit dem Loch (12),
c) Positionieren eines Lederstücks (14) in das Loch (12), wobei die Dermisseite an die Kleberückschicht befestigt wird, und
d) Tintenstrahldruck eines dekorativen Bildes auf dem Lederstück (14), um ein dekoriertes Lederstück (15) zu erhalten, und
wobei in der Kleberückschicht (13) ein repositionierbarer druckempfindlicher Klebstoff verwendet wird.

2. Das Verfahren nach Anspruch 1, wobei die Halteschicht (11) dicker ist als das Lederstück.

3. Das Verfahren nach Anspruch 1 oder 2, wobei die Außenkontur durch Scannen des Lederstücks (14) erhalten wird.

4. Das Verfahren nach einem der Ansprüche 1 bis 3, wobei das Loch (12) mittels eines Laserschneiders herausgeschnitten wird.

5. Das Verfahren nach einem der Ansprüche 1 bis 4, wobei ein Bildlayout für Tintenstrahldruck auf einer ein oder mehrere Löcher (12) enthaltenden Halteschicht (11) definiert wird.

6. Das Verfahren nach einem der Ansprüche 1 bis 5, wobei die Halteschicht (11) oder die Kleberückschicht einen Identifikationscode (16) umfasst.

7. Das Verfahren nach Anspruch 6, wobei der Identifikationscode (16) maschinenlesbar ist.

8. Das Verfahren nach einem der Ansprüche 1 bis 7, wobei im Schritt d eine oder mehrere, durch UV LED-Dioden härtbare pigmenthaltige Tintenstrahltinten durch Tintenstrahldruck gedruckt werden.

9. Das Verfahren nach einem der Ansprüche 1 bis 8, wobei das Lederstück (14) ein Crustlederstück mit einer Polyurethan enthaltenden tintenaufnehmenden Schicht ist.

10. Das Verfahren nach einem der Ansprüche 1 bis 9, wobei die Halteschicht (11) eine PVC-Schaumplatte ist.

11. Eine Haltevorrichtung, umfassend eine Halteschicht (11), die ein der Außenkontur eines Lederstücks (14) entsprechendes Loch (12) umfasst und eine an der Halteschicht (11) und dem Lederstück (14) befestigte Kleberückschicht (14) umfasst, wobei in der Kleberückschicht (13) ein repositionierbarer druckempfindlicher Klebstoff verwendet wird.

12. Die Haltevorrichtung nach Anspruch 11, wobei die Halteschicht (11) eine PVC-Schaumplatte ist.

13. Die Haltevorrichtung nach einem der Ansprüche 11 bis 12, wobei die Halteschicht einen Identifikationscode (16), der vorzugsweise maschinenlesbar ist, umfasst.

## Revendications

1. Procédé pour la fabrication de cuir naturel décoré comprenant les étapes consistant à:
a) mettre à disposition une couche de serrage (11) comprenant un trou (12) correspondant au contour extérieur d'une pièce de cuir (14),
b) fixer une couche dorsale adhésive (13) à la couche de serrage (11) comprenant le trou (12),
c) positionner une pièce de cuir (14) dans le trou (12), **caractérisé en ce que** le côté derme est fixé à la couche dorsale adhésive, et
d) imprimer, selon le procédé de l'impression à jet d'encre, une image décorative sur la pièce de cuir (14) afin d'obtenir une pièce de cuir décorée (15), et
**caractérisé en ce qu'**il est utilisé un adhésif repositionnable sensible à la pression dans la couche dorsale adhésive (13).

2. Procédé selon la revendication 1, **caractérisé en ce que** l'épaisseur de la couche de serrage (11) est supérieure à l'épaisseur de la pièce de cuir.

3. Procédé selon la revendication 1 ou 2, **caractérisé en ce que** le contour extérieur est obtenu en balayant la pièce de cuir (14).

4. Procédé selon l'une quelconque des revendications 1 à 3, **caractérisé en ce que** le trou (12) est découpé à l'aide d'une découpeuse à laser.

5. Procédé selon l'une quelconque des revendications 1 à 4, **caractérisé en ce qu'**il est défini un dessin d'image pour l'impression à jet d'encre sur une couche de serrage (11) comprenant un ou plusieurs trous (12).

6. Procédé selon l'une quelconque des revendications 1 à 5, **caractérisé en ce que** la couche de serrage (11) ou la couche dorsale adhésive comprend un code d'identification (16).

7. Procédé selon la revendication 6, **caractérisé en ce que** le code d'identification (16) est lisible par machine.

8. Procédé selon l'une quelconque des revendications 1 à 7, **caractérisé en ce que** dans l'étape d, une ou plusieurs encres pour jet d'encre pigmentées durcissables par des diodes LED UV sont imprimées par impression à jet d'encre.

9. Procédé selon l'une quelconque des revendications 1 à 8, **caractérisé en ce que** la pièce de cuir (14) est une pièce de cuir en croûte comprenant une couche réceptrice d'encre contenant du polyuréthane.

10. Procédé selon l'une quelconque des revendications 1 à 9, **caractérisé en ce que** la couche de serrage (11) est un carton mousse en PVC.

11. Dispositif de serrage comprenant une couche de serrage (11) comprenant un trou (12) correspondant au contour extérieur d'une pièce de cuir (14) et une couche dorsale adhésive (14) fixée à la couche de serrage (11) et à la pièce de cuir (14), **caractérisé en ce qu'**il est utilisé un adhésif repositionnable sensible à la pression dans la couche dorsale adhésive (13).

12. Dispositif de serrage selon la revendication 11, **caractérisé en ce que** la couche de serrage (11) est un carton mousse en PVC.

13. Dispositif de serrage selon l'une quelconque des revendications 11 à 12, **caractérisé en ce que** la couche de serrage comprend un code d'identification (16) qui est de préférence lisible par machine.
